# FASCICULE DE BREVET EUROPEEN

(11) **EP 0 974 297 B1**
(45) Date de publication et mention de la délivrance du brevet: **05.03.2003**
(21) Numéro de dépôt: 99440170.1
(22) Date de dépôt: 28.06.1999
(51) Int. Cl.: A47J 27/14

(54) **Accessoire de cuisine pour manipuler des récipients**
Küchengerät zum Manipulieren von Gefässen
Kitchen utensil for manipulating vessels

(30) Priorité: 22.07.1998 FR 9809445
(43) Date de publication de la demande: 26.01.2000
(73) Titulaire: Reber, Walter, 67700 Saverne (FR)
(72) Inventeur: Reber, Walter, 67700 Saverne (FR)

(56) Documents cités:
- EP-A- 0 419 144
- CH-A- 665 342
- US-A- 4 173 925
- US-A- 4 301 717

## Description

La présente invention se rapporte au domaine technique général des appareils électroménagers, et plus particulièrement au domaine des accessoires de cuisine. Il est souvent nécessaire de compléter les éléments de base utilisés pour des préparations culinaires avec des accessoires et ce pour des raisons de sécurité ou d qualité pour lesdites préparations. L'utilisation de récipients, du type marmite par exemple est dans de nombreuses situations problématique. En effet selon la nature des aliments préparés, il est indispensable de transporter, de déplacer ou tout simplement de vider progressivement par petites quantités ou d'un seul tenant le contenu d'un tel récipient. Cela n'est pas sans risques, dans la mesure où de tels récipients peuvent être encombrants, volumineux, lourds et chauds voire brûlants. Il n'est donc pas rare d'avoir à manipuler de tels récipients, et de telles manipulations nécessitent une force physique et une vigilance de tout instant. En outre, une telle manipulation, par le biais de poignées prévues sur ce genre de récipients, ne laisse à la personne manipulant ces récipients, aucune possibilité de libérer une main pour contrôler le déversement, manipuler d'autres ustensiles ou tout simplement pour remuer le contenu desdits récipients.

De tels inconvénients se font ressentir davantage lorsque la personne manipulant ces récipients est une personne physiquement diminuée ou handicapée ou ne pouvant se servir de ses deux mains.
On connaît par exemple avec le document CH-665 342, un appareil de cuisine avec une marmite basculante, comprenant un bâti sur lequel ladite marmite est montée de façon amovible et pivotante. L'appareil décrit comporte également un brûleur solidaire du bâti. Un levier de manipulation permet de pivoter la marmite et son support lequel est monté pivotant sur le bâti à l'aide d'axes de pivotement. L'appareil décrit semble présenter l'inconvénient d'être conçu pour des cuisson de grandes quantités d'une part, et de n'être pas adapté pour un usage polyvalent et domestique, par exemple avec des récipients de type différents d'autre part. En outre l'appareil de cuisine décrit semble encombrant et par conséquent destiné à un usage professionnel, dans les restaurants et les cantines.

L'objet de la présente invention vise donc à remédier aux inconvénients de l'état de la technique précédemment cités et à réaliser un accessoire de cuisine permettant de manipuler différents récipients et de généraliser son utilisation.

L'objet de la présente invention est atteint à l'aide d'un accessoire de cuisine destiné à être utilisé avec un récipient de cuisson, du type marmite, casserole ou autre, comportant un support, un cadre articulé sur ledit support, des moyens de blocage pour fixer de façon amovible le récipient sur le cadre, ainsi que des moyens de positionnement et d'orientation permettant de pivoter le récipient solidaire du cadre, entre au moins une position de traitement et au moins une position de déversement du contenu du récipient, caractérisé en ce que les moyens de blocage comprennent des éléments de réglage pour s'adapter aux dimensions du type hauteur et/ou diamètre du récipient.

Les moyens de positionnement et d'orientation comprennent avantageusement un organe de manipulation solidaire du cadre et permettant de pivoter ledit cadre par rapport au support.

L'accessoire de cuisine conforme à l'invention est remarquable en ce qu'il présente une structure modulable, rétractable ou pliable de manière à réduire son encombrement pour le transport et le rangement.

Avantageusement, l'accessoire de cuisine comporte un support pourvu de patins antidérapants pour obtenir une meilleure adhérence dudit accessoire sur une table ou un plan de travail.

Selon une réalisation avantageuse de l'accessoire de cuisine conforme à l'invention, les moyens de blocage comprennent des mâchoires susceptibles d'enserrer le récipient.

Dans un autre mode de réalisation de l'accessoire de cuisine conforme à l'invention, le cadre présente une partie sensiblement horizontale sur laquelle repose le récipient et laquelle présente une ouverture localisée en regard du fond dudit récipient, de manière à être disposé au dessus d'un foyer chauffant du type flamme de gaz.

D'autres caractéristiques et avantages ressortiront à la lecture de la description détaillée donnée ci-après en référence aux dessins annexés à titre d'exemples non limitatifs dans lesquels :
- la figure 1 représente une vue de face d'un récipient monté sur un premier exemple de réalisation de l'accessoire de cuisine conforme à l'invention,
- la figure 2 représente une vue de côté du récipient monté sur l'accessoire conforme à l'invention de la figure 1 par exemple,
- la figure 3 représente une vue partielle de dessous de l'accessoire de cuisine de la figure 1,
- la figure 4 représente une vue de détail d'un système de blocage de l'accessoire de cuisine de la figure 1,
- la figure 5 représente une vue de face d'un deuxième exemple de réalisation d'un accessoire de cuisine conforme à l'invention,
- la figure 6 représente une section selon la ligne A-A de la figure 5,
- la figure 7 représente une vue de dessus de l'accessoire de cuisine représenté à la figure 5.
- la figure 8 représente une vue partielle d'un troisième exemple de réalisation d'un accessoire de cuisine conforme à l'invention,
- la figure 9 représente une vue partielle d'un quatrième exemple de réalisation d'un accessoire de cuisine conforme à l'invention,
- la figure 10 représente une vue de dessus de l'accessoire de cuisine selon un mode supplémentaire de réalisation conforme à l'invention,
- la figure 11 représente une vue de face d'un cinquième exemple de réalisation de l'accessoire de cuisine conforme à l'invention,
- la figure 12 représente une vue de face d'un autre mode de réalisation de l'accessoire de cuisine conforme à l'invention,
- la figure 13 représente une variante d'un détail de l'accessoire de cuisine de la figure 12,
- la figure 14 représente un sixième mode de réalisation de l'accessoire de cuisine conforme à l'invention.

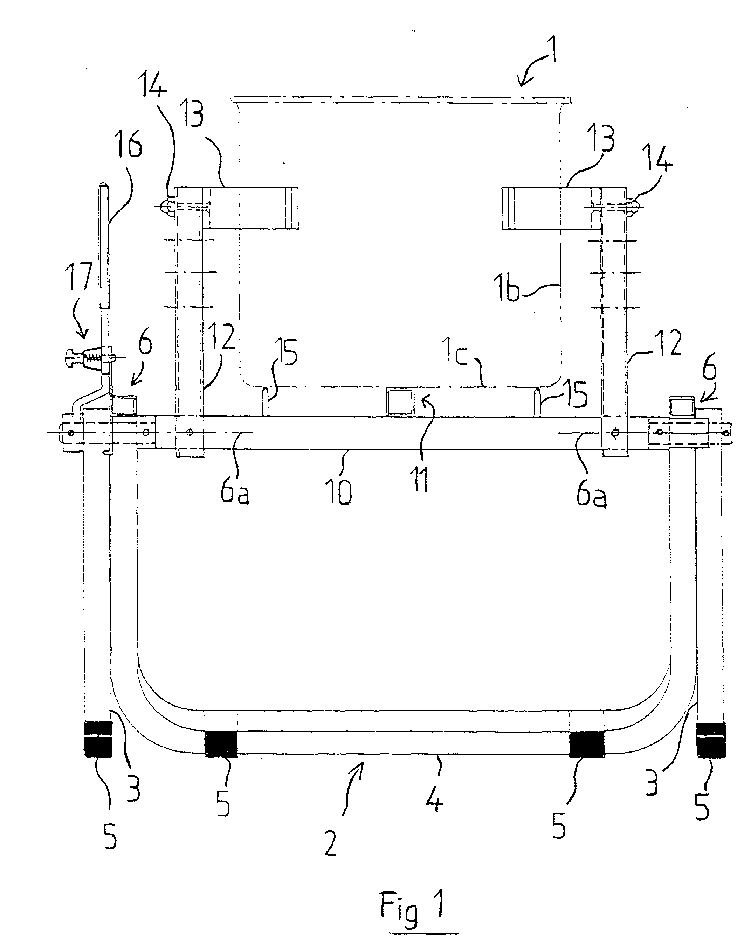

L'accessoire de cuisine conforme à l'invention est représenté à la figure 1 en soutenant un récipient (1) du type marmite. L'accessoire de cuisine comporte un support (2), lequel est constitué de pieds extérieurs (3) et d'un pied interne (4). Ce dernier est avantageusement réalisé avec un tube rigide présentant une forme sensiblement en U et les pieds extérieurs (3) sont sensiblement rectilignes. Les pieds (3, 4) sont par exemple réalisés avec un tube de section rectangulaire ou circulaire.

Les parties des pieds (3.4) reposant sur un quelconque support sont de préférence pourvus de patins (5) pour obtenir une meilleure adhérence de l'accessoire de cuisine par exemple sur une table ou un plan de travail. Ces patins (5) de préférence antidérapants sont par exemple constitués de caoutchouc, d'aimants ou de tout autre matériau susceptible d'augmenter leur adhérence. Des ventouses peuvent également convenir pour remplacer ou compléter les patins (5).

Le pied intérieur (4) est articulé par rapport aux pieds extérieurs (3) à l'aide d'articulations (6) situées de chaque côté dudit pied intérieur (4). Les articulations (6) présentent avantageusement des axes (6a) confondus. Les pieds extérieurs (3) peuvent ainsi être rabattus dans le plan d'extension défini par la forme en U du pied intérieur (4), par exemple pour faciliter les opérations de transport ou de rangement de l'accessoire de cuisine.

L'accessoire de cuisine conforme à l'invention comporte également un cadre (10) relié aux articulations (6). Le cadre (10) sert en partie à supporter le récipient (1) et est avantageusement associé à une traverse (11) s'étendant sensiblement orthogonalement audit cadre (10). Ce dernier est par exemple constitué d'une tige de section rectangulaire. Le cadre (10) est également associé à des montants (12) fixés sur ledit cadre (10) au voisinage de chaque articulation (6). Les montants (12) sont fixés par tous moyens sur le cadre (10) et s'étendent vers le haut en partant du cadre (10).

Les montants (12) sont aussi pourvus de mâchoires (13) à leur extrémité supérieure, servant à enserrer et à bloquer le récipient (1) sur le cadre (10). Les mâchoires (13) sont mobiles par rapport aux montants (12) et sont déplacées pour enserrer ou pour libérer le récipient (1) à l'aide de vis (14) ou de tout autre élément de serrage.
Avantageusement, les moyens de blocage comprennent des éléments de réglage pour s'adapter aux dimensions du type hauteur et/ou diamètre du récipient (1).

Ainsi les montants (12) sont par exemple conçus de façon télescopique pour enserrer efficacement des récipients (1) de différente hauteur.

Le sous-ensemble mâchoire (13)- vis (14)- montant (12) est assemblé de manière connue en soi. Des cales (15) réalisées avec un matériau résistant à la chaleur sont également prévues sur le cadre (10) pour supporter le récipient (1). Ce dernier repose donc sur la traverse (11) et sur les cales (15). L'accessoire de cuisine conforme à l'invention comprend par ailleurs un organe de manipulation (16) solidaire du cadre (10) et destiné à faire basculer ou pivoter ledit cadre(10) autour des axes des articulations (6). Les cales (15) peuvent être réalisées avec des aimants ou être associées à des aimants.

L'organe de manipulation (16) est avantageusement combiné avec un système de maintien (17) permettant de maintenir ou de retenir le cadre (10) dans une position ou une inclinaison donnée vis à vis d'une direction verticale ou vis à vis du support (2). A titre d'exemple les mâchoires (13) peuvent être au moins partiellement réalisées ou associées à des aimants.

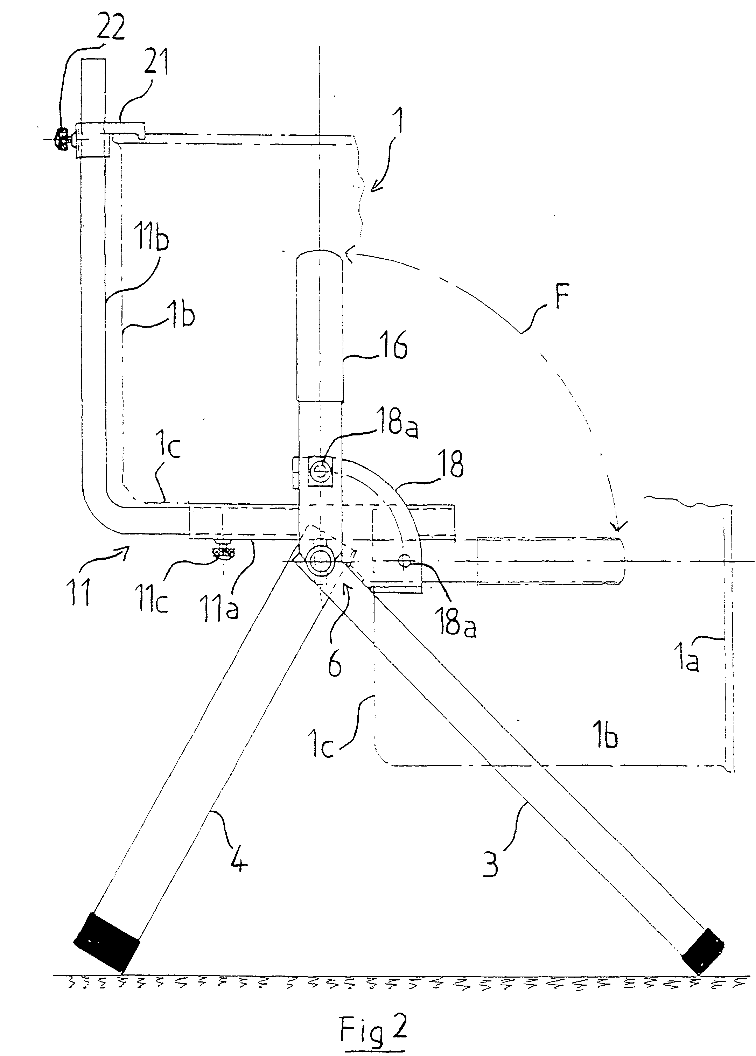

La figure 2 représente l'accessoire de cuisine conforme à l'invention en vue de côté. L'organe de manipulation (16) est susceptible de pivoter par rapport à l'articulation (6), de manière à basculer le cadre (10) et par conséquent le récipient (1), d'une position de travail ou d'attente vers une position de vidange et inversement. Le basculement est repéré à l'aide de la flèche en traits mixtes (F) sur la figure 2.

La position de travail correspondant par exemple à la position du récipient (1) avec un fond (1c) sensiblement horizontal, et la position de vidange sont définies par le système de maintien (17), lequel comprend un repère (18). Ce dernier est constitué d'une plaque fixée sur le pied interne (4) et pourvue de perçages (18a) ou de crans, correspondants aux différentes positions accessibles pour le sous-ensemble cadre (10)- récipient (1).

La traverse (11) est constituée d'une partie centrale (11a) creuse, de préférence à section rectangulaire et d'un bras coudé (11b). Ce dernier s'engage dans la partie centrale (11a) d'une part et s'étend le long de la paroi latérale (1b) du récipient (1) d'autre part. Une vis de serrage (11c) est prévue sur la partie centrale (11a) pour bloquer le bras coudé (11b), lequel s'engage de façon télescopique dans ladite partie centrale (11a). Ceci permet à la traverse (11) de s'adapter à divers diamètres du récipient (1) destiné à être monté sur l'accessoire de cuisine.

Avantageusement le bras coudé (11b) comporte un organe de maintien (21) permettant de bloquer le récipient (1) par son bord supérieur (1a) et d'assurer un maintien stable sur le cadre (10). Le récipient (1) peut alors être orienté de façon optimale en toute sécurité pour procéder au déversement de son contenu. Un basculement du récipient (1) de 90° par rapport à la verticale tel que cela est représenté à la figure 2, peut de préférence se poursuivre jusqu'à un angle de l'ordre de 130° par rapport à la verticale de manière à permettre un déversement ou un écoulement de la totalité du contenu du récipient (1). Les opérations de nettoyage et de rinçage sont alors plus faciles.

Avantageusement l'organe de maintien (21) est monté coulissant sur le bras coudé (11b) pour s'adapter à des récipients (1) de différentes hauteurs. L'organe de maintien (21) est par exemple fixé à une hauteur donnée du bras coudé (11b), à l'aide d'une vis de positionnement (22). La configuration de l'organe de maintien (21), par exemple sous forme de crochet, est choisie pour bloquer le bord supérieur (1a) avec un minimum de jeu. Le bras coudé (11b) s'étend bien entendu du côté opposé au côté de déversement ou de vidange du récipient (1).

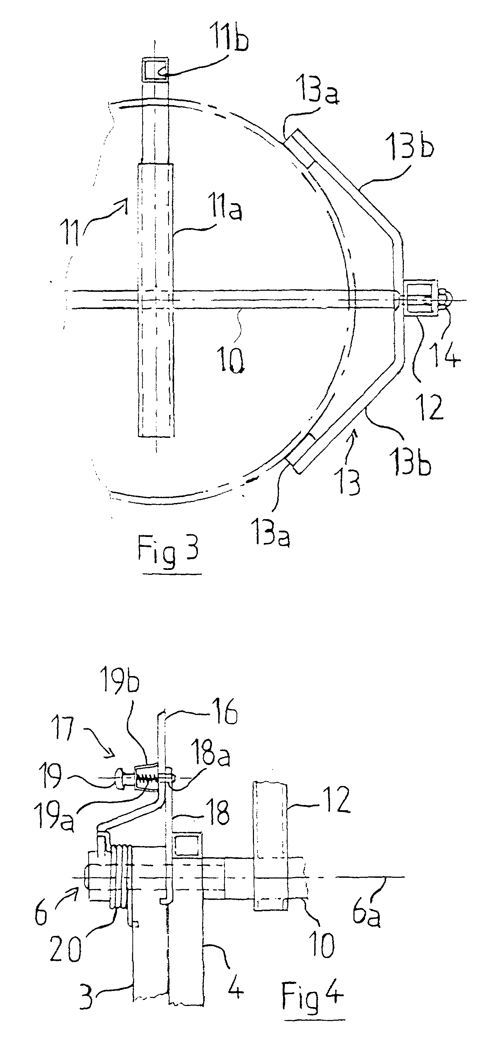

Le système de maintien (17), représenté plus en détails à la figure 4, comprend un téton (19) monté sur l'organe de manipulation (16). L'une des extrémités du téton (19) est susceptible de s'engager dans l'un des perçages (18a) lorsque l'organe de manipulation (16) est actionné. Ainsi lorsque le téton (19) se trouve en regard de l'un des perçages (18a), ledit téton (19) est déplacé sous l'effet d'un ressort (19a) logé dans une partie creuse (19b) prévu à cet effet sur l'organe de manipulation (16). Un tel système est connu en soi. La coopération du téton (19) et du perçage (18a) correspond par conséquent au blocage du cadre (10) et du récipient (1) dans une inclinaison déterminée par rapport à la verticale ou par rapport au support (2).

L'organe de manipulation (16) peut également être monté sur l'articulation (6), contre la force de rappel d'un ressort à spirale (20). Ce dernier prend alors appui sur l'organe de manipulation (16) avec sa première extrémité et sur le pied extérieur (3) avec son autre extrémité. Dans l'exemple représenté à la figure 4, le repère (18) est fixé sur le pied extérieur (3). Il est évident que l'organe de manipulation (16) et le cadre (10) sont solidaires de l'axe (6a) de l'articulation (6) de manière à pivoter simultanément vis à vis du repère (18) et du support (2).

La figure 3 représente une vue partielle de dessous de l'accessoire de cuisine conforme à l'invention. La mâchoire (13) agencée sur le montant (12) présente une forme à deux brides dont les extrémités sont pourvues de patins (13a) assurant une bonne adhérence aux parois latérales (1b) souvent lisses, ainsi qu'une isolation thermique satisfaisante. Les dimensions de la mâchoire (13) sont choisies de façon à obtenir une préhension optimale du récipient (1). Les zones de contact de la mâchoire (13) avec le récipient (1), à savoir les patins de serrage (13a), se trouvent donc de part et d'autre du cadre (10) à l'extrémité de tiges (13b). Les dimensions de la mâchoire (13), des patins (13a) ainsi que la configuration même desdites mâchoires (13) peuvent aisément être déterminées par expérimentation, sachant que ces pièces devront enserrer et retenir le récipient (1) éventuellement lourd et chaud. Le déplacement latéral des mâchoires (13) résultant de leur montage sur les montants (12), par exemple à l'aide de la vis de réglage (14) est une solution mécanique connue.

Le cadre (10), la traverse (11) et le support (2) sont assemblés pour constituer une structure de soutien substantiellement rigide, avec au moins un minimum de jeu pour les articulations (6) notamment, assurant ainsi une tenue efficace du récipient (1). Les mâchoires (13) sont conçues de manière à s'adapter à tout type de récipient (1) et notamment à un récipients ovale tel qu'un faitout ou un autocuiseur. A ce titre, chaque mâchoire (13) peut être reliée au montant (12) correspondant avec un degré de liberté adéquat. Les mâchoires (13) peuvent aussi comporter un système d'autocentrage pour assurer un contact optimal avec la paroi du récipient (1). Ceci est particulièrement avantageux pour les récipients de forme ovale ou spéciale et pour utiliser l'accessoire de cuisine avec des récipients (1) présentant des diamètres différents.

Dans la suite de la description différents exemples de réalisation de l'accessoire de cuisine conforme à l'invention seront décrits avec des éléments présentant quelques différences avec les mêmes dénominations et portant des références augmentées ou diminuées d'un multiple de 100 lorsque l'on passe d'un exemple de réalisation à un autre. Les éléments structurellement et fonctionnellement inchangés d'un exemple à l'autre conservent les même références.

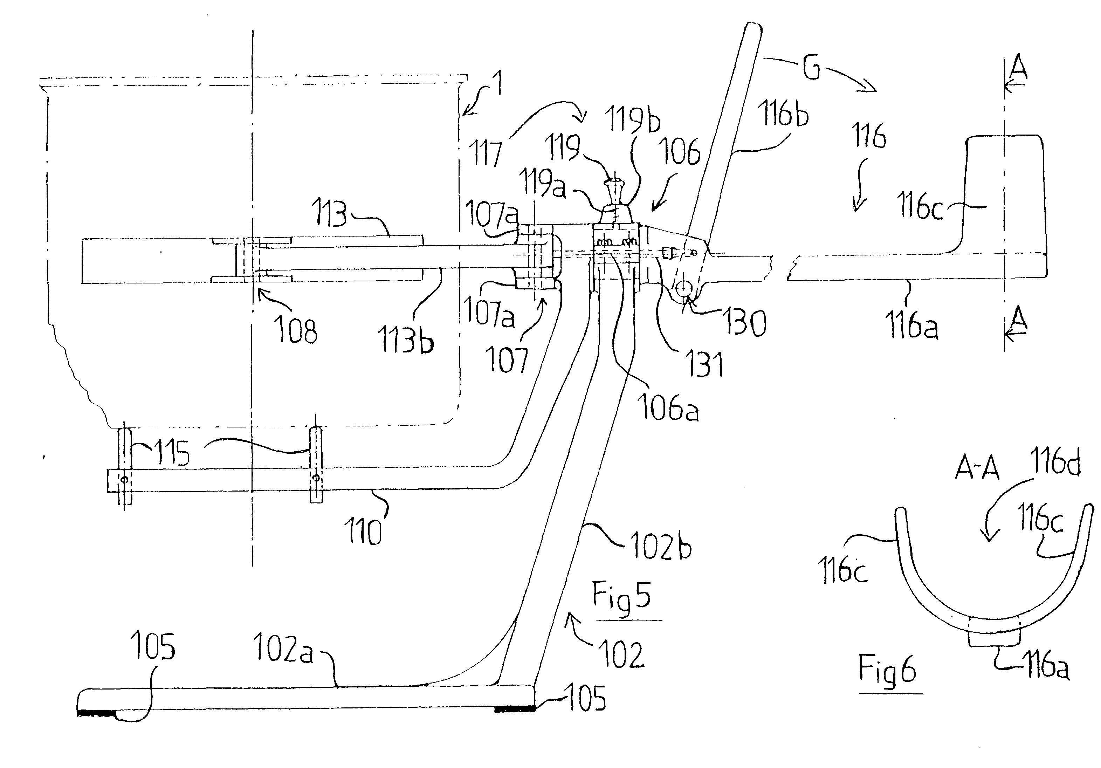

La figure 5 représente une vue de face d'un deuxième exemple de réalisation de l'accessoire de cuisine conforme à l'invention. Ainsi le support (102) présente une forme en L avec une partie horizontale (102a) et une partie montante (102b). Cette dernière se termine avec l'articulation (106) servant à articuler le cadre (110). L'organe de manipulation (116) est solidaire du cadre (110) par l'intermédiaire de l'axe (106a)de l'articulation (106), ledit axe (106a) traversant avantageusement l'extrémité supérieure de la partie montante (102b). Il est donc possible de faire pivoter simultanément le cadre (110) et l'organe de manipulation (116) par l'intermédiaire de l'axe (106a) de l'articulation (106). L'axe (106a) peut être pourvu de tout élément connu du type cylindre, fourreau ou autre, de manière à guider le pivotement du cadre (100).

Le cadre (110) comporte également une articulation complémentaire (107) destinée à déplacer les mâchoires (113). Le récipient (1) est représenté en traits mixtes sur cette figure 5. Chaque mâchoire (113) est articulée à l'extrémité dune tige (113b) grâce à une articulation additionnelle (108). L'autre extrémité de chaque tige (113b) est liée à l'articulation complémentaire (107). Cette derrière. ainsi que l'articulation additionnelle (108) sont orientées selon des axes verticaux. Les tiges (113b) et les mâchoires (113) sont donc en mesure de se déplacer dans un plan horizontal. Le déplacement des mâchoires (113) est assuré par un organe de serrage (116b), dune part relié aux tiges (113b) avec un bras de transmission (131) et d'autre part articulé sur l'organe de manipulation (116) à l'aide d'une articulation de serrage (130) horizontale. L'organe de manipulation (116) est donc associé à l'organe de serrage (116b) permettant de bloquer le récipient (1) sur le cadre (100).

Une action sur l'organe de serrage (116b) dans le sens de la flèche G représentée à la figure 5, c'est à dire vers l'extrémité libre de l'organe de manipulation (116), provoque une translation du bras de transmission (131) ainsi qu'un pivotement horizontal des mâchoires (113) correspondant au serrage du récipient (1). Une poussée de l'organe de serrage (116b) dans le sens opposé à la flèche G, permet de libérer le récipient (1) des mâchoires (113).

Le cadre (110) présente aussi des cales (115) éventuellement réglables en hauteur, sur lesquelles repose le récipient (1), une fois monté sur l'accessoire de cuisine. L'organe de manipulation (116) comporte avantageusement une partie horizontale en forme d'étrier (116a) dont l'extrémité libre présente des rehaussements (116c) aptes à recevoir l'avant-bras du manipulateur ou utilisateur de l'accessoire de cuisine. L'étrier (116a) est de préférence modulable et orientable pour le confort de l'utilisateur.

L'accessoire de cuisine représenté à la figure 5 comporte également un système de maintien (117) permettant de bloquer le récipient (1) dans une position par exemple verticale ou horizontale. Le système de maintien (117) est monté sur l'extrémité de la partie montante (102) et comprend un téton (119) susceptible de s'engager dans un logement correspondant ménagé par exemple dans une partie tournante de l'articulation (106) de manière à interdire le basculement du cadre (110). Le téton (119) est monté contre la force de rappel d'un ressort (119a) positionné dans une partie creuse (119b) adéquate, laquelle est dans le cas de la figure 5 notamment, traversée par ledit téton (119). Pour débloquer l'articulation (106), de manière à autoriser un pivotement du récipient (1), il suffit de tirer sur la partie accessible du téton (119).

Le cadre (110) présente également une forme sensiblement en L dont la partie montante se termine par une liaison rigide avec l'axe (106a) de l'articulation (106).

Le cadre (110) comporte par exemple à la figure 5, une extrémité présentant en vue de face une forme en U, réalisant un support d'articulation (107a). Les articulations complémentaires (107) sont logées verticalement dans les branches latérales de cette forme en U.

La figure 6 représente une section prise selon la ligne A-A de la figure 5, et montre plus précisément la forme de l'organe de manipulation (116). Les rehaussements (116c) s'étendent de part et d'autre de l'étrier (116a) et présentent une forme incurvée de manière à définir un espace interne (116d) adapté et confortable dans lequel l'avant-bras peut prendre appui.

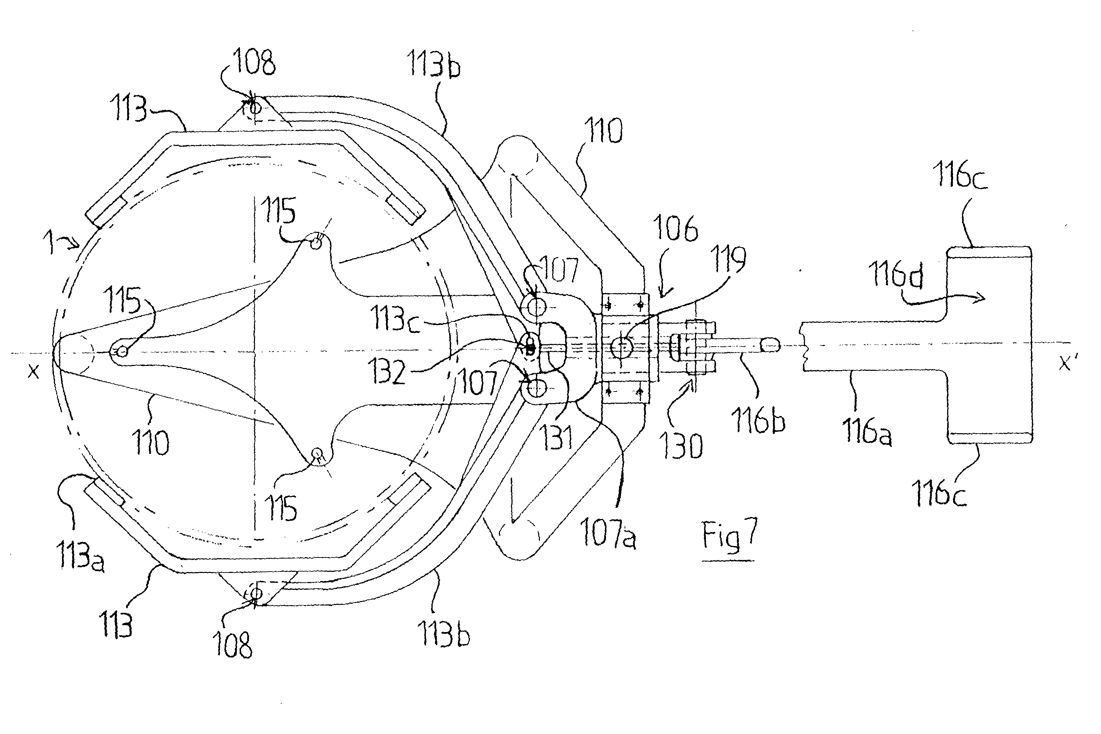

La figure 7 montre que chaque tige (113b) articulée à l'articulation complémentaire (107) correspondante présente également une ouverture (113c). Ces ouvertures se superposent au moins partiellement de manière à être traversées par l'extrémité de la tige de transmission (131), laquelle comporte par exemple un ergot (132) à cet effet. Les ouvertures (113c) sont déportées vers le centre de l'espace séparant les deux articulations complémentaires (107), de manière à constituer des bras de levier s'étendant de chaque articulation complémentaire (107) à l'ouverture (113c). Une traction ou une poussée sur la tige de transmission (131) provoque alors le pivotement des tiges (113b) et par conséquent des mâchoires (113) dans un plan orthogonal aux articulations complémentaires (107). L'actionnement des bras de levier (107-132) permet donc de bloquer ou de libérer le récipient (1) entre les mâchoires (113). Un pivotement de l'organe de serrage (116b) autour de l'articulation de serrage (130) permet donc de maintenir le récipient (1) solidaire du cadre (110).

Diverses configurations du cadre (110) et de l'agencement de l'articulation (106) avec ledit cadre (110), l'organe de manipulation (116) et le support d'articulation (107a)peuvent être envisagées sans sortir du cadre de la présente invention. La partie sensiblement horizontale du cadre (110) peut ainsi présenter toute forme susceptible de soutenir le récipient (1), ladite forme pouvant être associée ou complétée grâce aux cales (115).

La figure 8 représente une vue partielle d'un troisième exemple de réalisation de l'accessoire de cuisson conforme à l'invention, dans lequel l'articulation (106) est constituée de l'extrémité de la partie montante (102b). Cette dernière présente un orifice cylindrique (109) dans lequel est montée une pièce cylindrique (106b) reliée solidairement à l'organe de manipulation (116) et au cadre (110). L'interface de la pièce cylindrique (106b) et de l'orifice cylindrique (109) est constituée par exemple d'un ou plusieurs roulements à billes (106c) ou autres roulements, facilitant le mouvement de basculement du récipient (1).

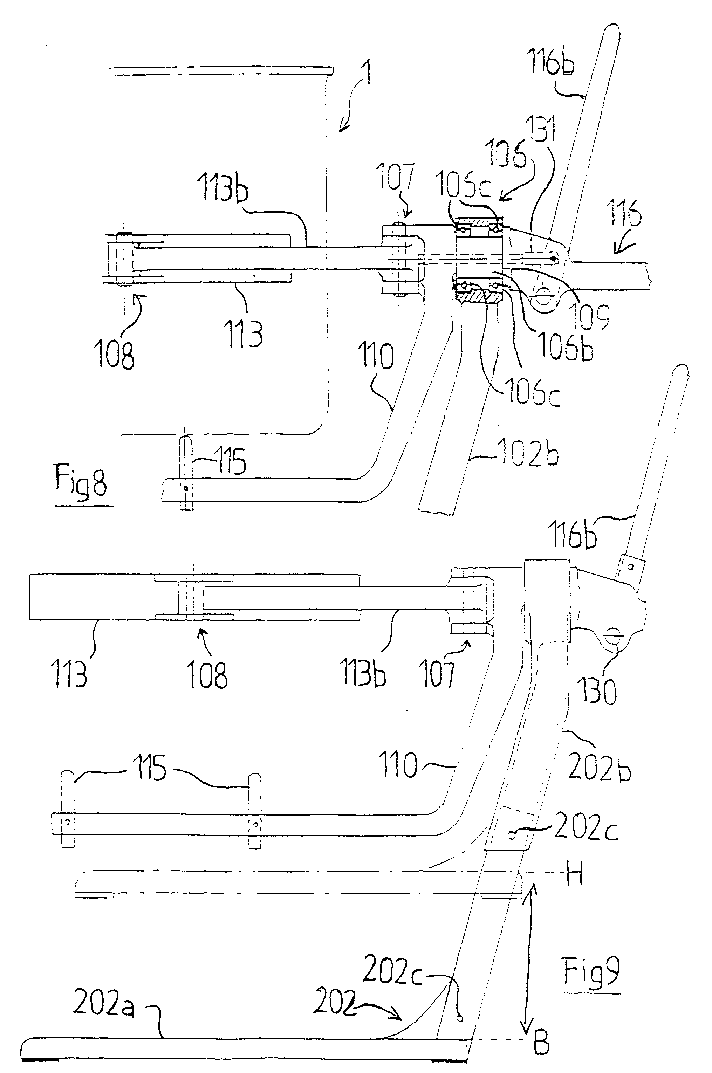

La figure 9 représente le support (202) avec une partie horizontale (202a) et une partie montante (202b) télescopique munie de moyens de blocage (202c) connus en soi. Cette conception permet de disposer la partie horizontale (202a) par exemple à un niveau B ou H correspondant respectivement à un encombrement plus ou moins prononcé de l'accessoire de cuisine. Le niveau H correspond par exemple à une configuration de transport ou de rangement, alors que le niveau B correspond par exemple à une configuration de travail ou d'utilisation de l'accessoire de cuisine conforme à l'invention. Les niveaux B et H peuvent également se rapporter à l'utilisation d'un récipient (1) respectivement plus ou moins grand ou haut. Le support (202) présente donc une structure modulable en hauteur de manière à rapprocher ou à écarter du sol ou d'un plan de travail le récipient (1) monté sur l'accessoire de cuisine. Le déversement dans des contenants de différentes tailles et hauteur est alors facilité.

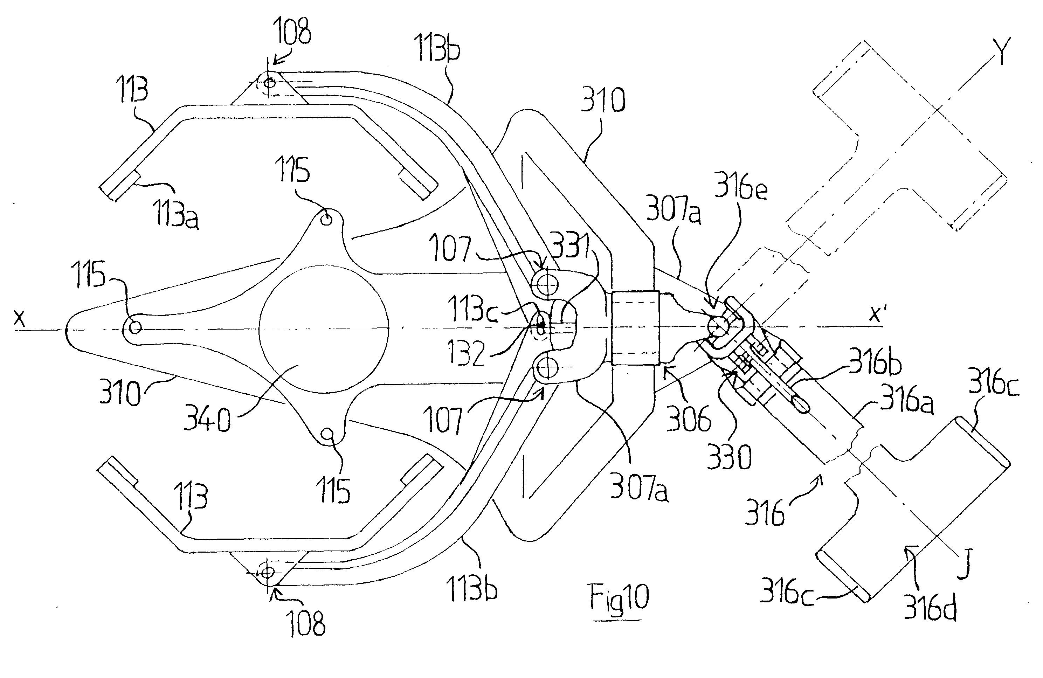

La figure 10 représente un mode de réalisation supplémentaire de l'accessoire de cuisine conforme à l'invention. Ce dernier comporte un organe de manipulation (316) relié au support (310) par l'intermédiaire dune liaison du type joint universel (316e) ou d'une articulation à cardans. L'organe de manipulation (316) est pour le reste conforme au descriptif des figures 5 et 6. L'organe de manipulation (316) peut ainsi être orienté vis à vis de l'axe de symétrie (x-x') de l'accessoire de cuisine dans un plan d'extension horizontal. Une telle orientation. possible de part et d'autre de l'axe de symétrie (x-x') permet à l'utilisateur d'optimiser sa position par rapport à l'accessoire de cuisine de manière à garder un contrôle strict sur les opérations de basculement du récipient (1). Deux orientations accessibles pour l'organe de manipulation (316) sont représentées à la figure 10, l'une selon un axe (J), et l'autre en traits mixtes selon un axe (Y). La transmission du mouvement de l'organe de serrage (316b) vers la tige de transmission (331) se fait à travers le joint universel (316e) et ce de façon connue en soi. De manière intéressante le cadre (310) présente une ouverture (340) venant en regard du fond du récipient (1) lorsque ce dernier est monté sur l'accessoire de cuisine conforme à l'invention. Un moyen de chauffe du type flamme de gaz peut alors être disposé sous le cadre (310) et le fond (1c) du récipient (1). Lorsque le cadre (310) est mobile verticalement par rapport à un plan de travail, l'écartement entre le fond (1c) du récipient (1) et un foyer chauffant peut être choisi. Une telle conception permet par exemple de chauffer le contenu du récipient (1) en l'absence dune cuisinière ou d'une plaque chauffante. L'accessoire de cuisine conforme à l'invention peut donc être utilisé pour cuire le contenu d'un autocuiseur par exemple. Ce dernier est alors facilement utilisable en vacances, dans un camping et plus généralement partout ou il était difficile voire impossible de cuisiner avec un autocuiseur.

Les exemples de réalisation de l'accessoire de cuisine représentés aux figures 5 à 10 sont remarquables dans la mesure où le plan d'extension dans lequel se déplacent les mâchoires (113), contient l'axe de l'articulation (106). Le plan supportant le fond du récipient (1) se situe donc à un niveau plus bas, ou rapproché de la partie horizontale (102a; 202a ; 402a). Ceci procure une stabilité intéressante lorsque le récipient (1) est monté sur l'accessoire de cuisine. On peut éventuellement éviter de pourvoir ledit accessoire de cuisine du système de maintien (117). Tel est le cas pour les accessoires représentés à la figure 8, 9 et 10 par exemple. Ces derniers permettent également de basculer le récipient (1) dans deux sens, rendant la manipulation possible avec la main gauche et la main droite et ce avec la même facilité.

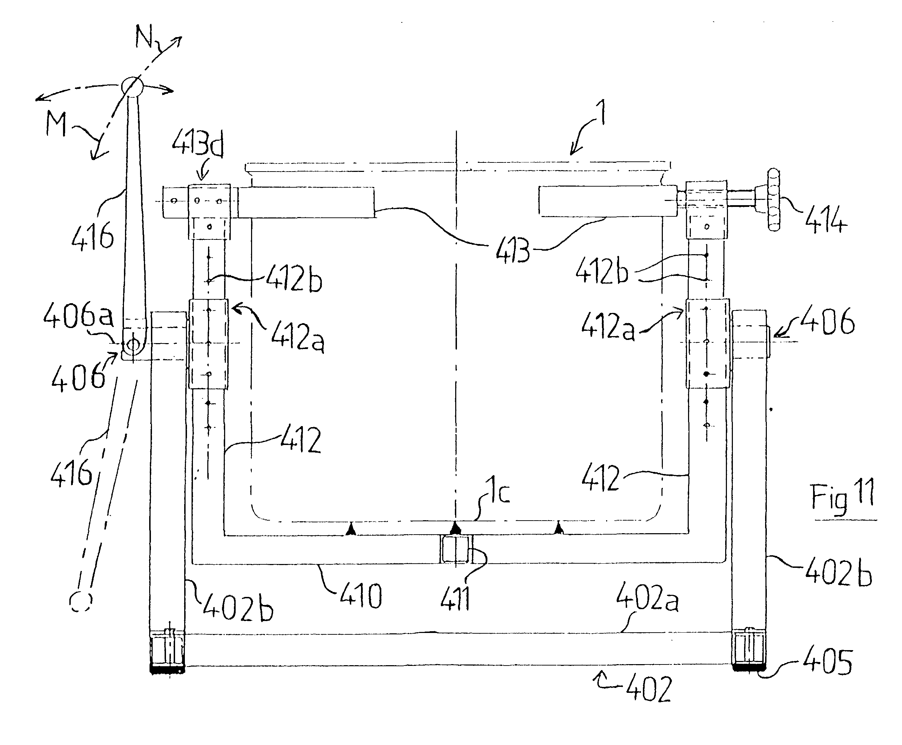

Un autre exemple de réalisation de l'accessoire de cuisine conforme à l'invention est représenté à la figure 11. Cette dernière montre un cadre (410) en forme de U dont les branches latérales constituent des montants (412) solidaires des articulations (406), lesquelles sont montées sur des parties montantes (402b) du support (402). Des moyens de fixation (412a, 412b) sont également prévus pour monter le cadre (410) sur des articulations (406). Les montants (412) peuvent ainsi être coulissés et fixés à des hauteurs déterminées par tous moyens mécaniques connus. L'axe de pivotement du récipient (1), lequel est confondu avec les axes des articulations (406) peut de ce fait être plus ou moins proche du fond dudit récipient (1). La stabilité de l'ensemble accessoire-récipient (1) est augmentée lorsque le cadre (410) est proche de la partie horizontale (402a) du support (402). En revanche, une remontée du cadre (410) vers les articulations (406) permet un meilleur déversement du contenu du récipient (1). Ainsi lorsque le cadre (410) est pivoté d'environ 90° ou plus si nécessaire, le bord du récipient (1) par lequel se déverse son contenu est situé à une hauteur suffisante d'un plan de travail (405a), pour déverser ledit contenu dans des réceptacles de différentes hauteurs. Les mâchoires (413), dont une est susceptible de prendre quelques positions discrètes à l'aide dune pièce de montage (413d) correspondante et dont l'autre est positionnée à l'aide dune vis de serrage (414), sont montées à l'extrémité de chaque montant (412). L'organe de manipulation (416) est constitué d'un levier monté pivotant selon un axe de pivotement orthogonal à l'axe (406a) de l'une des articulations (406), en partant dune position haute ( traits pleins) ou d'une position basse ( traits mixtes) pour ledit organe de manipulation (416). Le déplacement de l'organe de manipulation (416) est partiellement schématisé avec une flèche M.

L'organe de manipulation (416) peut ainsi être dirigé vers le haut ou vers le bas à la convenance de l'utilisateur, tout en conservant sa fonction, laquelle consiste à entraîner en rotation le cadre (410), selon une flèche N. L'organe de manipulation (416) est donc susceptible d'être déplacé selon des trajectoires localisées dans des plans d'extension orthogonaux. Il peut effectivement être intéressant de commander le basculement du récipient (1) avec un levier dirigé vers le bas, par exemple pour positionner le bras du manipulateur plus confortablement.

Des moyens de fixation (412a, 412b) pour ajuster la position des mâchoires (413) par rapport au récipient (1) sont aussi prévus. Les moyens de fixation (412a, 412b) sont par exemple constitués respectivement d'éléments du type bille, mobile et poussée par un ressort de manière à s'engager dans des trous correspondants. Ces derniers sont ménagés dans des structures creuses traversées par les montants (412). Un montage similaire peut être prévu entre la pièce de montage (413d) et l'une des mâchoires (413). D'autres moyens de montage ou de fixation connus peuvent également convenir.

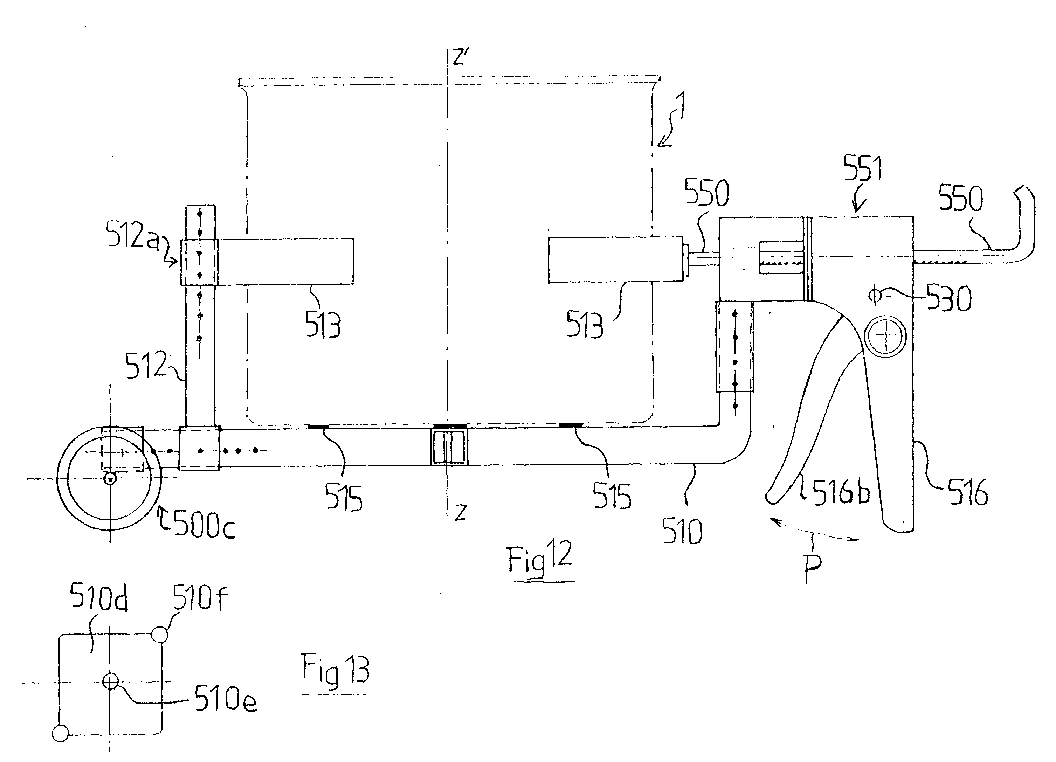

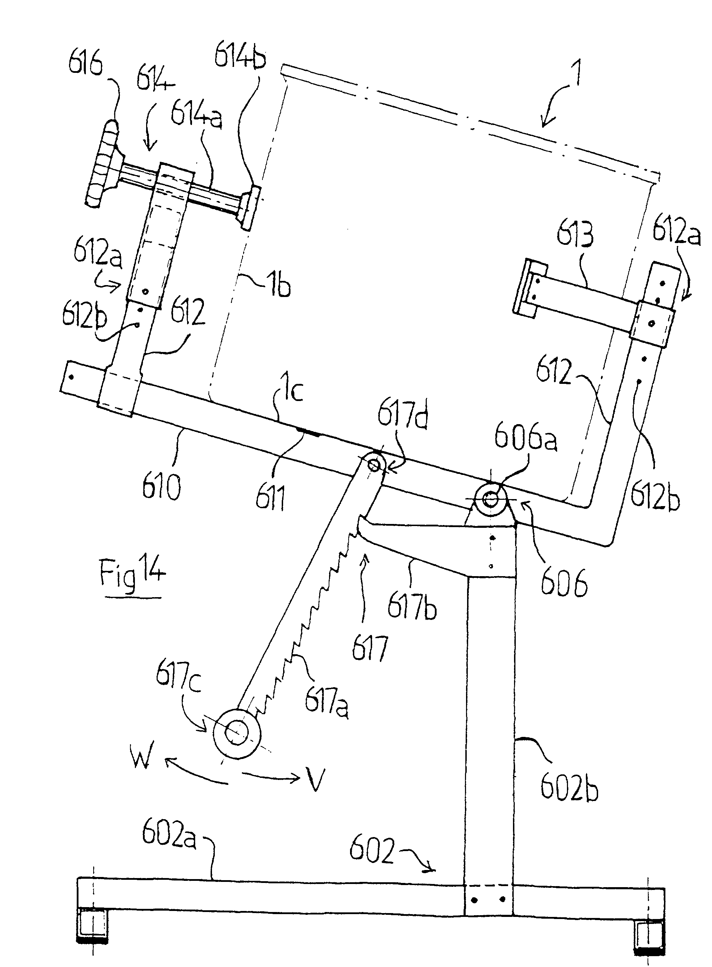

La figure 12 et la figure 13 correspondent à une autre conception de l'accessoire de cuisine conforme à l'invention. L'accessoire de cuisine comporte un cadre (510) de forme sensiblement en U. Le blocage du récipient (1) se fait d'une manière semblable à celui décrit à la figure 11. Le cadre (510) est articulé sur une roulette (510c) laquelle est disposée à une extrémité du cadre (510). Des mâchoires (513) sont aussi montées sur des montants (512) (voir également figure 11). L'une des mâchoires (513) est susceptible d'être déplacée dans un plan orthogonal à l'axe de symétrie (z-z') du récipient (1). Ce déplacement est obtenu à l'aide d'une tige crantée (550) permettant de translater et de bloquer la mâchoire (513) dans une position donnée. Les moyens servant à déplacer la mâchoire (513) constituent un dispositif du type pistolet (551), connu en tant que tel et utilisé par exemple comme serre-joint. Ce dispositif comprend une poignée et une gâchette articulée par rapport à ladite poignée pour constituer respectivement un organe de manipulation (516) et un organe de serrage (516b). D'autres applications sont également connues pour un tel dispositif. Ce dernier est conçu avantageusement pour libérer le récipient (1) afin de le dégager de l'accessoire de cuisine. Le dispositif comprend donc des moyens pour libérer la tige crantée (550) par exemple en faisant tourner d'un quart de tour ladite tige. L'organe de serrage (516b) est déplacé selon la flèche P de la figure 12, pour bloquer le récipient (1) en faisant avancer progressivement la tige crantée (550) avec chaque traction sur l'organe de serrage (516b).

L'utilisateur de l'accessoire de cuisine conforme à l'invention peut ainsi prendre en main l'organe de manipulation et soulever le cadre (510) en le pivotant grâce à la roulette (510c). Cette dernière est de préférence montée sur le cadre (510) par exemple à l'aide d'une rotule pour permettre au cadre (510) de pivoter suivant différentes directions. Une orientation optimale du récipient (1) peut ainsi être recherchée. La roulette (510c) peut avantageusement être remplacée par une plaque (510d) supportant le cadre (510), lequel est avantageusement lié à ladite plaque (510d) via une rotule ou un autre mécanisme orientable connu (510e). La plaque (510d) est avantageusement pourvue d'éléments d'appui (510f) pour augmenter l'adhérence de l'accessoire de cuisine, disposé sur la surface de travail ou sur la table.

L'accessoire de cuisine conforme à l'invention et représenté à la figure 14 comporte un support (602) de forme sensiblement en T, laquelle présente une partie horizontale (602a) et une partie montante (602b). Cette dernière se termine par une articulation (606) d'axe (606a), sur laquelle est articulée un cadre (610) supportant le récipient (1). Une traverse (611) sensiblement perpendiculaire au cadre (610) permet d'améliorer le soutien du récipient (1) en augmentant les points d'appui. Le cadre (610) présente une forme sensiblement en U dont les deux branches montantes réalisent des montants (612). Ces derniers sont par exemple télescopiques et comportent des mâchoires (613) enserrant le récipient (1). Les mâchoires (613), au nombre de deux, s'étendent de préférence symétriquement sur la périphérie du récipient (1) et de part et d'autre du cadre (610). Les mâchoires (613) venant s'appuyer sur un côté du récipient (1), sont complétées par une vis de serrage (614), dont l'extrémité d'appui (614b) vient appuyer sur l'autre côté du récipient (1). Le montant (612) comportant la vis de serrage (614) peut avantageusement être déplacé sur le cadre (610) pour prendre une position adaptée à la dimension du récipient (1).

La vis de serrage (614) comporte une partie filetée (614a) engagée dans un taraudage du montant (612). Ainsi une rotation de la vis de serrage (614) permet de bloquer ou de libérer le récipient (1). Des moyens de fixation (612a, 612b) permettent de positionner la vis de serrage et les mâchoires (613) à différentes hauteurs du récipient (1) et par conséquent d'optimiser la position du plan de serrage ou de blocage en fonction de la taille ou de la hauteur du récipient (1). La vis de serrage (614) présente également une zone de préhension, du type molette servant à tourner ladite vis de serrage (614) et de déplacer le cadre (610). La vis de serrage (614) réalise ainsi un organe de manipulation (616) pour procéder au déversement du contenu du récipient (1).

L'accessoire de cuisine comporte également un système de maintien (617) réalisé avec une tige crantée (617a) articulée sur le cadre (610) avec une articulation (617d). La tige crantée (617a) est libre en rotation grâce à l'articulation (617d) et peut se déplacer sous l'effet de son propre poids. La partie montante (602b) comporte par ailleurs un bras fixe (617b) dont l'extrémité vient s'engager dans des logements correspondants de la tige crantée (617a). Ainsi lorsque l'utilisateur pivote le cadre (610) autour de l'articulation (606), il soulève partiellement le cadre (610) et le récipient (1), et le bras fixe (617b) se dégage de son logement de la tige crantée (617a). Cette dernière est soulevée et se déplace sous l'effet de son propre poids dans le sens indiqué par la flèche V pour rester en contact avec ledit bras fixe (617b). Les formes de l'extrémité du bras fixe (617b) et des crans de la tige crantée (617a) sont prévues pour favoriser un bon coulissement entre ces deux éléments lorsque l'on soulève le cadre (610) et pour obtenir un maintien en position du récipient (1) après la libération de l'organe de manipulation (616). Le bras fixe (617b) vient alors s'engager dans l'un des crans de la tige crantée (617a). Le système de maintien (617) comporte également une poignée (617c) à l'extrémité de la tige crantée (617a). L'utilisateur peut alors libérer la tige crantée (617a) du bras fixe (617b) selon la flèche W et abaisser par exemple en position horizontale le cadre (610) à l'aide de l'organe de manipulation (616). On peut ainsi disposer le récipient (1) dans différentes positions et orientations, lesquelles sont déterminées par un quadrilatère modulable matérialisé par le bras fixe (617b), le segment défini en partie par la partie montante (602b) localisée entre l'articulations (606) et le bras fixe (617b), une partie du cadre (610) localisée entre les articulations (606) et (617d),ainsi qu'une partie de la tige crantée (617a) localisée entre l'articulation (617d) et le cran dans lequel est engagé l'extrémité du bras fixe (617b). De nombreuses positions sont ainsi accessibles pour le récipient (1) à la satisfaction de l'utilisateur.

L'accessoire de cuisine conforme à l'invention présente par exemple un assemblage avantageux du cadre (10 ; 510 ; 610) avec le montant (12 ; 512 ; 612). En effet le cadre (10 ; 510 ; 610) peut présenter une ou des surfaces à crans ou aspérités (non représentées) susceptibles de venir en contact avec la partie du montant (12 ; 512 ; 612) coulissant sur le cadre (10 ; 510 ; 610). Ainsi lors du blocage du récipient (1), l'effort transmis sur le montant (12 ; 512 ; 612) provoque un léger pivotement de ce dernier, suffisant toutefois pour obtenir un engagement avec les crans ou aspérités du cadre (10 ; 510 ; 610). Le montant (12 ; 512 ; 612) des figures 1, 12 et 14 notamment, se trouve alors bloqué sur le cadre (10 ; 510 ; 610) par l'opération de serrage du récipient (1). La libération du récipient (1), supprime l'effort exercé sur le montant (12 ; 512 ; 612) et autorise alors à nouveau son déplacement ou coulissement sur le cadre (10 ; 510 ;610). Un tel assemblage est intéressant dans la mesure où il permet à l'accessoire de cuisine de s'adapter à un grand nombre de récipients (1) de diamètre différent.

Diverses modifications ou adaptations, de même que différentes transpositions d'éléments d'un exemple de réalisation vers un autre peuvent s'envisager sans sortir du cadre de la présente invention. Il en est de même pour les avantages résultant des différents modes de réalisation de l'accessoire de cuisine conforme à l'invention. Il est en effet possible de compléter ou de modifier un exemple de réalisation de l'accessoire de cuisine conforme à l'invention en utilisant un ou plusieurs éléments d'un autre exemple de réalisation pour obtenir des avantages ou effets techniques particuliers. Il est ainsi possible de pourvoir l'accessoire de cuisine conforme à l'invention de exemple de réalisation décrit, de patins antidérapants.

## Revendications

1. Accessoire de cuisine destiné à être utilisé avec un récipient (1) de cuisson, du type marmite, casserole ou autre comportant un support (2 ; 102 ; 202 ; 402 ; 500c ; 602), un cadre (10 ; 110 ; 310 ; 410 ; 510 ; 610) articulé sur ledit support (2 ; 102 ; 202 ; 402 ; 500c ; 602), des moyens de blocage pour fixer de façon amovible le récipient (1) sur le cadre (10 ; 110 ; 310 ; 410 ; 510 ; 610), ainsi que des moyens de positionnement et d'orientation permettant de pivoter le récipient (1) solidaire du cadre (10 ; 110 ; 310 ; 410 ; 510 ; 610), entre au moins une position de traitement et au moins une position de déversement du contenu du récipient (1), **caractérisé en ce que** les moyens de blocage comprennent des éléments de réglage pour s'adapter aux dimensions du type hauteur et/ou diamètre du récipient (1).

2. Accessoire de cuisine selon la revendication 1, **caractérisé en ce qu'**il présente une structure modulable, rétractable ou pliable de manière à réduire son encombrement pour le transport et le rangement.

3. Accessoire de cuisine selon la revendication 1 ou 2, **caractérisé en ce que** les moyens de blocage comprennent des mâchoires (13 ; 113 ; 413 ; 513 ; 613) susceptibles d'enserrer le récipient (1).

4. Accessoire de cuisine selon la revendication 3, **caractérisé en ce que** les mâchoires (13 ; 113 ; 413 ; 513 ; 613) sont au moins partiellement constituées d'aimants ou associées à des aimants.

5. Accessoire de cuisine selon l'une quelconque des revendications 1 à 4, **caractérisé en ce que** les moyens de positionnement et d'orientation comprennent un organe de manipulation (16 ; 116 ; 316 ; 416 ; 516 ; 616) solidaire du cadre (10 ; 110 ; 310 ; 410 ; 510 ; 610) et permettant de pivoter ledit cadre (10 ; 110 ; 310 ; 410 ; 510 ; 610) par rapport au support (2 ; 102 ; 202 ; 402 ; 602).

6. Accessoire de cuisine selon la revendication 5, **caractérisé en ce que** l'organe de manipulation (116 ; 316 ; 516) est associé à un organe de serrage (116b ; 316b ; 516b) permettant de bloquer le récipient (1) sur le cadre (110 ; 310 ; 510).

7. Accessoire de cuisine selon la revendication 5 ou 6, **caractérisé en ce que** l'organe de manipulation (316) est relié au cadre (310) à l'aide dune liaison du type joint universel (316e).

8. Accessoire de cuisine selon l'une quelconque des revendications 1 à 7, **caractérisé en ce qu'**il comporte au moins une articulation (6 ; 106 ; 306 ; 406 ; 606) reliant le cadre (10 ; 110 ; 310 ; 410 ; 610) au support (2 ; 202 ; 402 ; 602) et permettant au cadre (10 ; 110 ; 310 ; 410 ; 610) de pivoter dans les deux sens de rotation autour de l'axe (6a ; 106a ; 306a ; 406a ; 606a) de ladite articulation (6 ; 106 ; 306 ; 406 ; 606).

9. Accessoire de cuisine selon l'une quelconque des revendications 1 à 8, **caractérisé en ce qu'**il comprend un système de maintien (17 ; 117 ; 617) permettant de retenir le cadre (10 ; 110 ; 610) dans une inclinaison donnée par rapport au support (2 ; 102 ; 202 ; 602).

10. Accessoire de cuisine selon l'une quelconque des revendications 1 à 9, **caractérisé en ce que** le cadre (310) présente une partie sensiblement horizontale sur laquelle repose le récipient (1) et laquelle présente une ouverture (340) localisée en regard du fond (1c) dudit récipient (1), de manière à être disposé au dessus d'un foyer chauffant du type flamme de gaz.

11. Accessoire de cuisine selon l'une quelconque des revendications 1 à 10, **caractérisé en ce que** le support (2 ; 102 ; 202) présente une structure modulable en hauteur de manière à rapprocher ou à écarter du sol ou du plan de travail, le récipient (1) monté sur ledit accessoire.

12. Accessoire de cuisine selon l'une quelconque des revendications 1 à 11 **caractérisé en ce que** le support (2 ; 102 ; 202 ; 602) est pourvu de patins (5 ; 105 ; 405) antidérapants pour obtenir une meilleure adhérence dudit accessoire de cuisine sur une table ou un plan de travail.

13. Ensemble de cuisson comprenant au moins un récipient (1) et un accessoire de cuisine conforme à l'une quelconque des revendications 1 à 12.

## Patentansprüche

1. Küchengerät zur Verwendung mit einem Kochgefäss (1), welches zweihenklig oder mit einem Stiel versehen oder anders geartet sein kann, und welches eine Stützkonstruktion (2; 102; 202; 402; 500c; 602) aufweist, sowie einen Rahmen (10; 110; 310; 410; 510; 610) der an die Stützkonstruktion (2; 102; 202; 402; 500c; 602) angelenkt ist, sowie Mittel zur Blockierung, um das Gefäss (1) auf dem Rahmen (10; 110; 310; 410; 510; 610) zu fixieren, so dass es gelöst werden kann, sowie Mittel zur Anordnung und Ausrichtung des Gefässes (1), wodurch dasselbe, fest mit dem Rahmen (10; 110; 310; 410; 510; 610) verbunden, gedreht werden kann, und zwar zwischen mindestens einer Ruhestellung und mindestens einer Stellung, in der der Inhalt aus dem Gefäss (1) ausgeleert werden kann, ***dadurch gekennzeichnet,* dass** die Mittel zur Blockierung Regulierungselemente aufweisen, die ein Anpassen an die Abmessungen, z.B. Höhe und/oder Durchmesser des Gefässes (1) ermöglichen.

2. Küchengerät nach Anspruch 1, ***dadurch gekennzeichnet,* dass** es eine veränderbare, verkleinerbare oder zusammenlegbare Konstruktion aufweist, um, für das Verstellen und Wegräumen seine Abmessungen zu verringern.

3. Küchengerät nach Anspruch 1 oder 2, ***dadurch gekennzeichnet,* dass** die Mittel zur Blockierung mit Backen (13; 113; 413; 513; 613) versehen sind, die das Gefäss (1) einklemmen können.

4. Küchengerät nach Anspruch 3, ***dadurch gekennzeichnet,* dass** die Backen (13; 113; 413; 513; 613) mindestens teilweise aus Magneten bestehen oder mit Magneten in Verbindung sind.

5. Küchengerät nach irgendeinem der Ansprüche 1 bis 4, ***dadurch gekennzeichnet,* dass** die Mittel zur Anordnung und Ausrichtung des Gefässes (1) ein Manipulationsorgan (16; 116; 316; 416; 516; 616), das fest mit dem Rahmen (10; 110; 310; 410; 510; 610) verbunden ist, aufweisen und das es erlaubt, diesen Rahmen (10; 110; 310; 410; 510; 610) zu drehen in Bezug auf die Stützkonstruktion (2; 102; 202; 402; 602).

6. Küchengerät nach Anspruch 5, ***dadurch gekennzeichnet* , dass** das Manipulationsorgan (116; 316; 516) mit einem Organ zum Festklemmen (116b; 316b; 516b) in Verbindung ist, wodurch das Gefäss (1) auf dem Rahmen (110; 310; 510) blockiert werden kann.

7. Küchengerät nach Anspruch 5 oder 6, ***dadurch gekennzeichnet,* dass** das Manipulationsorgan (316) mit dem Rahmen (310) mittels eines Verbindungsstücks in der Art eines Kardangelenks (316e) verbunden ist.

8. Küchengerät nach irgendeinem der Ansprüche 1 bis 7, ***dadurch gekennzeichnet,* dass** der Rahmen (10; 110; 310; 410; 610) mit der Stützkonstruktion (2; 202; 402; 602) durch mindestens ein Gelenk (6; 106; 306; 406; 606) verbunden ist, wodurch der Rahmen (10; 110; 310; 410; 610) die Möglichkeit hat, sich in beiden Rotationsrichtungen um die Achse (6a; 106a; 306a; 406a; 606a) des besagten Gelenks (6; 106; 306; 406; 606) zu drehen.

9. Küchengerät nach irgendeinem der Ansprüche 1 bis 8, ***dadurch gekennzeichnet,* dass** es mit einem Fixationssystem (17; 117; 617) versehen ist, welches es ermöglicht, den Rahmen (10; 110; 610) in irgendeiner gewünschten Neigung in Bezug auf die Stützkonstruktion (2; 102; 202; 602) festzuhalten.

10. Küchengerät nach irgendeinem der Ansprüche 1 bis 9, ***dadurch gekennzeichnet,* dass** der Rahmen (310) einen im wesentlichen horizontalen Teil aufweist, auf welchem das Gefäss (1) aufliegt und welcher eine Öffnung (340) unter dem Boden (1c) des besagten Gefässes (1) aufweist, so dass es über eine Wärmequelle, in der An einer Gasflamme, gestellt werden kann.

11. Küchengerät nach irgendeinem der Ansprüche 1 bis 10, ***dadurch gekennzeichnet,* dass** die Stützkonstruktion (2; 102; 202) in der Höhe verstellbar konzipiert ist, so dass das auf dem besagten Küchengerät stehende Gefäss (1) der Arbeitsfläche oder dem Boden angenähert oder davon entfernt werden kann.

12. Küchengerät nach irgendeinem der Ansprüche 1 bis 11, ***dadurch gekennzeichnet,* dass** die Stützkonstruktion (2; 102; 202; 602) mit rutschfesten Sohlen (5; 105; 405) versehen ist, um für das besagte Küchengerät auf dem Tisch oder der Arbeitsfläche eine bessere Haftung zu erreichen.

13. Kochvorrichtung bestehend aus mindestens einem Gefäss (1) und mindestens einem Küchengerät nach irgendeinem der Ansprüche 1 bis 12.

## Claims

1. Kitchen ustensil to be used with a cooking vessel (1) of the type of a pot or a pan or any other, comprising a supporting stand (2; 102; 202; 402; 500c; 602), a frame (10; 110; 310; 410; 510; 610) articulated on the said supporting stand (2; 102; 202; 402; 500c; 602), means to block in order to fix the vessel (1) on the frame (10; 110; 310; 410; 510; 610) in a removable way, as well as means for positioning and directing which allow to pivot the vessel (1) fixed firmly in the frame (10; 110; 310; 410; 510; 610) between at least one position of handling and at least one position of pouring out the content of the vessel (1), ***characterized in* that** the means to block include elements of adjustment so as to adapt to the dimensions, such as height and/or diameter of the vessel (1).

2. Kitchen ustensil according to Claim 1, ***characterized in* that** its structure is variable, retractable or foldable, so as to reduce its dimensions for transporting and storing away.

3. Kitchen ustensil according to Claim 1 or 2, ***characterized in* that** the means to block include jaws (13; 113; 413; 513; 613) which can grip the vessel (1).

4. Kitchen ustensil according to Claim 3, ***characterized in* that** the jaws (13; 113; 413; 513; 613) are at least in part composed of magnets or associated to magnets.

5. Kitchen ustensil according to any one of the Claims 1 to 4, ***characterized in* that** the means for positioning and directing include an organ of manipulation (16; 116; 316; 416; 516; 616) fixed firmly to the frame (10; 110; 310; 410; 510; 610) and allowing to pivot the said frame (10; 110; 310; 410; 510; 610) in relation to the supporting stand (2; 102; 202; 402; 602).

6. Kitchen ustensil according to Claim 5, ***characterized in* that** the organ of manipulation ( 116; 316; 516) is associated to an organ for tightening ( 116b; 316b; 516b) which allows to block the vessel ( 1 ) on the frame ( 110; 310; 510).

7. Kitchen ustensil according to Claim 5 or 6, ***characterized in* that** the organ of manipulation (316) is linked to the frame (310) through a link of the type of a universal joint (316e).

8. Kitchen ustensil according to any one of the Claims 1 to 7, ***characterized in* that** it comprises at least one articulation (6; 106; 306; 406; 606) linking the frame (10; 110; 310; 410; 610) to the supporting stand (2; 202; 402; 602) and allowing for the frame (10; 110; 310; 410; 610) to pivot in both directions of rotation around the axle (6a; 106a; 306a; 406a; 606a) of the said articulation (6; 106; 306; 406; 606).

9. Kitchen ustensil according to any one of the Claims 1 to 8, ***characterized in* that** it includes a system of holding (17; 117; 617) which allows to hold the frame (10; 110; 610) in any given inclination in relation to the supporting stand (2; 102; 202; 602).

10. Kitchen ustensil according to any one of the Claims 1 to 9, ***characterized in* that** the frame (310) includes a substantially horizontal element on which rests the vessel (1) and which has an opening (340) situated under the bottom (1c) of the said vessel (1), so that it can be placed above a heating spot of the type of a gas flame.

11. Kitchen ustensil according to any one of the Claims 1 to 10, ***characterized in* that** the supporting stand (2; 102; 202) is of a structure which can be adapted in height so as to place the vessel (1) resting on the said kitchen ustensil nearer to or farther off the ground or the working place.

12. Kitchen ustensil according to any one of the Claims 1 to 11, ***characterized in* that** the supporting stand (2; 102; 202; 602) is equipped with non-slip pads (5; 105; 405), so as to have a better adherence of the said kitchen ustensil on a table or a working place.

13. Cooking set including at least one vessel (1) and at least one kitchen ustensil according to any one of the Claims 1 to 12.
